# EUROPEAN PATENT APPLICATION

(11) **EP 3 018 953 A1**
(43) Date of publication of application: **11.05.2016**
(21) Application number: 14192563.6
(22) Date of filing: 10.11.2014
(51) Int. Cl.: H04W 56/00

(54) **Secondary cell synchronization**

(71) Applicant: FUJITSU LIMITED, Kawasaki-shi, Kanagawa 211-8588 (JP)
(72) Inventor: Fang, Yiwei, High Wycombe, HP11 1GD (GB); Moulsley, Timothy, Caterham, Surrey CR3 5EE (GB)
(74) Representative: Stebbing, Timothy Charles

(57) **Abstract**

In an LTE-based wireless communication system, a mechanism is provided for allowing the information regarding the time/frequency synchronization of a second cell (22) to be transmitted to a terminal (10) from a first cell (20 or 21). This accurate time/frequency information sharing in this way is possible when the two cells are located close to each other. The purpose of such synchronization information sharing is that the second cell (22) can switch off its transmission of the normal signals for cell identification such as. PSS/SSS/CRS if active, or discovery reference signal DRS when it is in the off mode. The terminal (10) will be able to obtain the synchronization information from the first cell (20 or 21). The terminal (10) may be instructed that it should derive the synchronization from that of the first cell, or to allow the first cell to convey directly the synchronization information to the terminal. The proposed invention allows terminals to synchronize with cells in off-mode, even when they are not transmitting signals such as the DRS.

## Description

### Field of the Invention

The present invention relates to a wireless communication method in which terminals connect to cells in a wireless network. The present invention further relates to a wireless communication system, a terminal, a base station and a computer program for use in said method.

Particularly, but not exclusively, the present invention relates to techniques for assisting a terminal in synchronizing with a secondary cell in a wireless communication system compliant with the LTE (Long Term Evolution) and LTE-Advanced radio technology standards as described in Release 12 and subsequent of the 3GPP specification series.

### Background of the Invention

Wireless communication systems are widely known in which terminals (also called user equipments or UEs, subscriber or mobile stations) communicate with base stations (BSs) within range of the terminals.

The geographical areas served by one or more base stations are generally referred to as cells, and typically many BSs are provided in appropriate locations so as to form a network covering a wide geographical area more or less seamlessly with adjacent and/or overlapping cells. (In this specification, the terms "system" and "network" are used synonymously). Each BS may support one or more cells and in each cell, the BS divides its available bandwidth, i.e. frequency and time resources, into individual resource allocations for the user equipments which it serves. The terminals are generally mobile and therefore may move among the cells, prompting a need for handovers between the base stations of adjacent cells. A terminal may be in range of (i.e. able to detect signals from and/or communicate with) several cells at the same time, but in the simplest case it communicates with one "serving" cell.

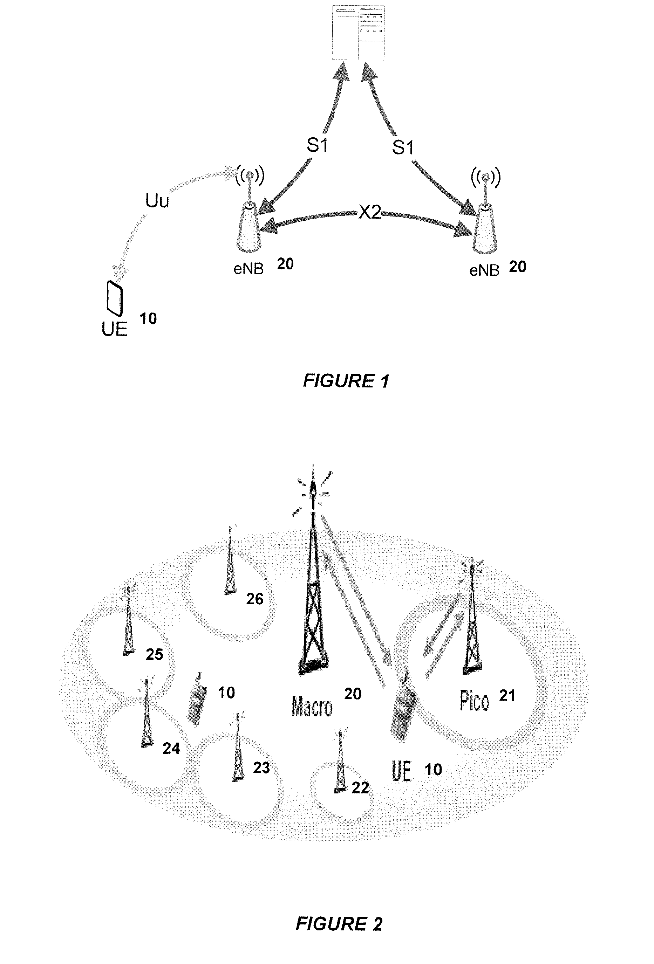

One type of cellular wireless network is based upon the set of standards referred to as Long-Term Evolution (LTE). The current version of the standard, Release 11 (Rel 11), is also referred to as LTE-A (LTE-Advanced), and the specifications for Release 12 are currently being finalised. The network topology in LTE is illustrated in Figure 1. As can be seen, each terminal 10, called a UE in LTE, connects wirelessly over an air interface (labelled Uu in Figure 1) to a base station in the form of an enhanced node-B or eNB 20. It should be noted that various types of eNB are possible. An eNB may support one or more cells at different carrier frequencies, each cell having differing transmit powers and different antenna configurations, and therefore providing coverage areas (cells) of differing sizes. Multiple eNBs deployed in a given geographical area constitute a wireless network called the E-UTRAN (and henceforth generally referred to simply as "the network"). An LTE network can operate in a Time Division Duplex, TDD, mode in which the uplink and downlink are separated in time but use the same carrier frequency, or Frequency Division Duplex, FDD, in which the uplink and downlink occur simultaneously at different carrier frequencies. Radio Resource Control (RRC) is a protocol layer in the UE and eNB to control various aspects of the air interface, including establishing, maintaining and releasing a RRC connection between the UE and eNB. Thus, for a UE to be served by a cell implies a RRC connection with the eNB providing or controlling that cell.

Each eNB 20 in turn is connected by a (usually) wired link (S1 in Figure 1) to higher-level or "core network" entities 101, including a Serving Gateway (S-GW), and a Mobility Management Entity (MME) for managing the system and sending control signalling to other nodes, particularly eNBs, in the network. In addition (not shown), a Packet Data Network (PDN) Gateway (P-GW) is present, separately or combined with the S-GW, to exchange data packets with any packet data network including the Internet. Thus, communication is possible between the LTE network and other networks. Meanwhile, the eNBs can communicate among themselves via a wired or wireless X2 interface as indicated in the Figure.

Figure 1 shows what is sometimes called a "homogeneous network"; that is, a network of base stations in a planned layout and which have similar transmit power levels, antenna patterns, receiver noise floors and similar backhaul connectivity to the core network. Current wireless cellular networks are typically deployed as homogeneous networks using a macro-centric planned process. The locations of the base stations are carefully decided by network planning, and the base station settings are properly configured to maximise the coverage and control the interference between base stations. However, future cellular wireless networks will adopt a "heterogeneous network" structure composed of two or more different kinds of cell, also referred to as a Small Cell Network or SCN.

The motivation for SCNs is the idea of network densification: increasing the number of network nodes, and thereby bringing them physically closer to the terminals, in order to improve traffic capacity and extending the achievable user-data rates of a wireless communication system. SCNs achieve network densification by the deployment of complementary low-power nodes under the coverage of an existing macro-node layer. In such a heterogeneous deployment, the low-power nodes provide very high traffic capacity and very high user throughput locally, for example in indoor and outdoor hotspot positions. Meanwhile, the macro layer ensures service availability and Quality of Experience (QoE) over the entire coverage area. In other words, the layer containing the low-power nodes can also be referred to as providing local-area access, in contrast to the wide-area-covering macro layer.

Figure 2 depicts a simple SCN. The large ellipse represents the coverage area or footprint of a Macro cell provided by a base station (Macro BS) 20. The smaller ellipses represent small cells (such as Pico or Femto cells) within the coverage area of the Macro cell, each having a respective low-power base station 21 - 26 (exemplified by Pico BS 21). Here, the Macro cell is a cell providing a "macro layer" of basic coverage in the network of a certain area, and the small cells are overlaid over the Macro cell, using the same or different carrier frequencies, providing a "low-power layer" for capacity boosting purposes particularly within so-called hot spot zones. A UE 10 is able to communicate both with Macro BS 20 and Pico BS 21 as indicated by the arrows in the Figure: when such communication occurs simultaneously, this is called "dual connectivity" of the UE. In this scenario, the Macro BS is a mobility anchor point for the UE, providing the control signalling for handovers of the UE between small cells. Whilst a Pico BS 21 is shown by way of example, it should be noted that various types of station can provide the small cells, including Home eNBs (HeNBs) providing Femto cells, or even other UEs if these can operate in a device-to-device (D2D) mode. Thus, other base stations 22-26 shown in Figure 2 could form other Pico cells or alternatively, Femto cells which are even lower power and smaller range than the Pico cell around pico base station 21. Any such cells are henceforth referred to simply as "small cells".

It should be noted that the presence of a Macro cell is not essential and the SCN may consist only of small cells. In any case, however, coordination among the cells at the same or nearby location is required and this is conveniently provided by a primary eNB such as the Macro BS 20 even for UEs not directly connected to the Macro BS.

Carrier aggregation (CA) is a technique applicable to the SCN. Using LTE Advanced carrier aggregation, it is possible to utilise more than one carrier (frequency band) and in this way increase the overall transmission bandwidth. These channels or carriers may be in contiguous elements of the spectrum, or they may be in different bands. Thus, a UE in an SCN may be simultaneously connected to one cell (often, but not necessarily, a Macro cell) having a first carrier frequency and referred to as the "primary cell" (PCell) for that UE: and to one or more other cells (usually but not necessarily small cells) using different carrier frequencies and possibly different frequency bands, and referred to as "secondary cells" (Scells) of that UE.

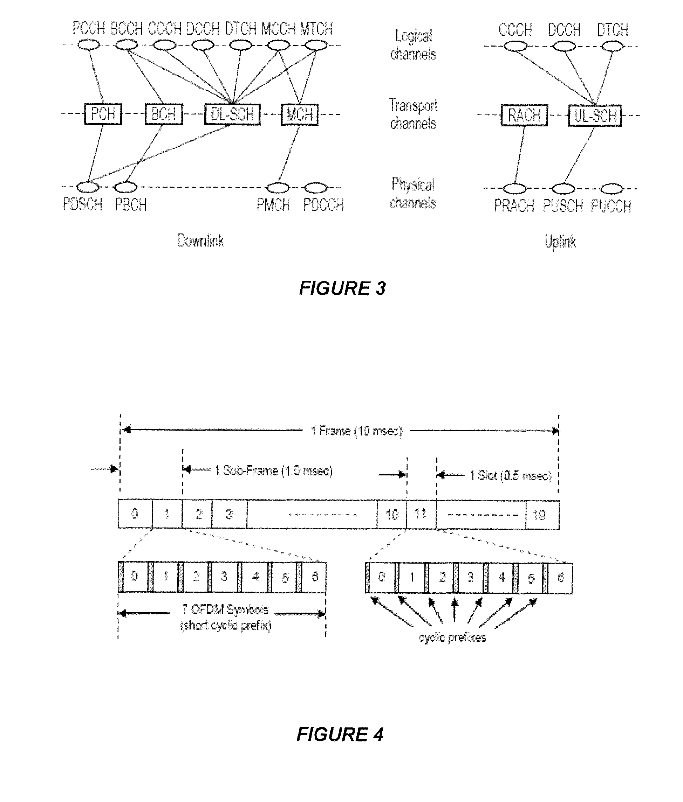

To assist in understanding the invention to be described, some explanation will now be given of "channels" for data and signalling, which are defined at various levels of abstraction within an LTE network. Figure 3 shows some of the channels defined in LTE at each of a logical level, transport layer level and physical layer level, and the mappings between them. A MAC layer (not shown) is responsible for mapping between the logical channels and transport channels. For present purposes, the downlink channels are of particular interest.

On the downlink, at the physical layer level, each cell conventionally broadcasts a number of channels and signals to all UEs within range, whether or not the UE is currently being served by that cell. Of particular interest for present purposes, these include a Physical Broadcast Channel PBCH as shown in Fig. 3. PBCH carries a so-called Master Information Block (MIB), which gives, to any UEs within range of the signal, basic information as described below. Primary and Secondary Synchronization Signals (PSS/SSS) are also broadcast to all devices within range. In addition to establishing a timing reference for a cell, these carry a physical layer cell identity and physical layer cell identity group for identifying the cell. These kinds of information are referred to below as "synchronization information".

In an LTE system, transmission is organized in "frames". The frame format differs between FDD (frame structure type 1) and TDD (frame structure type 2) for example. Frames follow successively one immediately after the other, and each is given a system frame number (SFN). Figure 4 shows a generic frame structure for LTE, applicable to the downlink, in which the 10 ms frame is divided into 20 equally sized slots of 0.5 ms. A "subframe" consists of two consecutive slots, so one radio frame contains 10 subframes.

Conventionally, each of the PSS and SSS is transmitted twice per frame, in other words with a 5ms periodicity (and consequently, only in some subframes). For example, PSS and SSS are both transmitted on the first and sixth subframe of every frame.

In LTE specifications, a UE can be considered as either synchronised or unsynchronised with respect to a cell. Successfully decoding the PSS and SSS allows a UE to obtain the synchronization information, including downlink timing and cell ID for a cell; in other words the UE becomes "synchronized" with the cell. In the synchronized state, the UE can transmit signals in the uplink (assuming resources are made available by the network, with a defined timing (the uplink timing is obtained by subtracting a "timing advance" TA from the downlink timing).

Once a UE has decoded a cell's PSS and SSS it is aware of the cell's existence and may decode the MIB in the PBCH referred to earlier. The PBCH is transmitted every frame, thereby conveying the MIB over four frames. The MIB includes some of the basic information which the UE needs to join the network, including system bandwidth, number of transmit antenna ports, and system frame number (SFN). Reading the MIB enables the UE to receive and decode the SIBs. A UE-to-cell association is then formed, and the UE can begin to receive user data (packets) from the cell, and/or transmit user data to the cell.

UEs need to measure each communication channel between itself and a given cell in order to provide appropriate feedback to that cell. To facilitate measurements of the channel by UEs, reference signals are transmitted by the cells. Various kinds of reference signal (or symbol) are provided in LTE, but for present purposes the most notable are the Common Reference Signal (CRS), which is cell specific and available to all UEs in a cell, a Channel State Information Reference Signal CSI-RS used by a UE to report CSI feedback, and a discovery reference signal (DRS), which is proposed to replace the CRS when a cell is in the off mode.

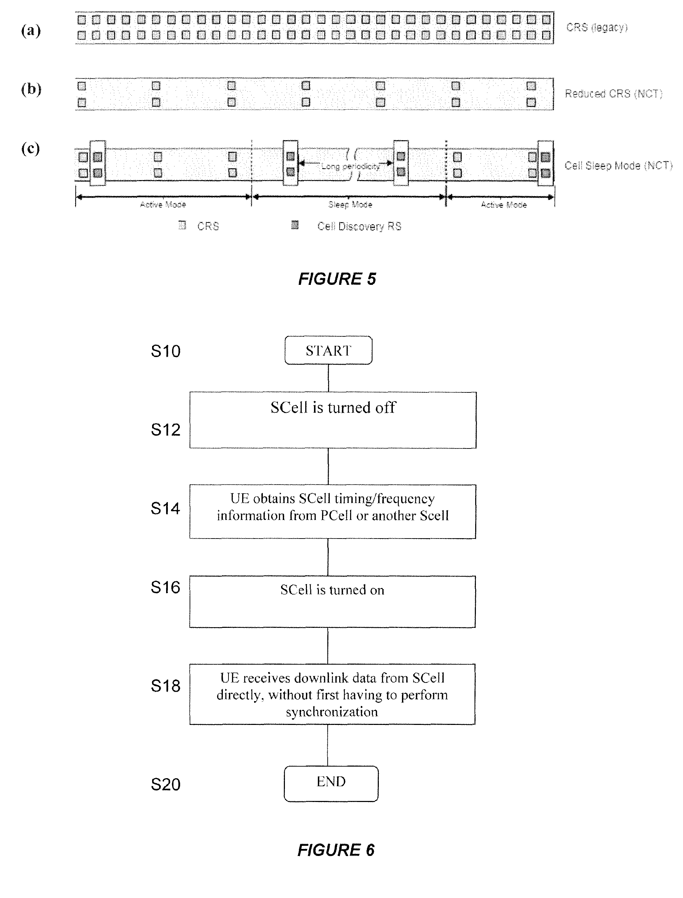

Figure 5(a) schematically shows the pattern of conventional (or "legacy") CRS transmitted by a cell. As indicated in the Figure, the CRS are broadcast often - in each subframe - and uninterruptedly. Even in the event that the cell is "muted" for certain subframes, it still broadcasts the CRS since these are expected by "legacy" terminals, as well as various other signals.

As mentioned earlier, in the Small Cell scenario such as Figure 2, a UE may be connected to a cell acting as a Primary Cell (PCell) and may be served by at least one cell acting as a Secondary cell (SCell) provided from the same or a nearby location. The PCell and the SCell(s) typically operate on different carrier frequencies and possibly on different frequency bands. The UE can receive and decode the data from all the bands simultaneously, and from a number of carriers limited by the UE capability. The focus is on Carrier Aggregation (CA) operation where each of the carriers corresponding to a PCell or a SCell is considered a component carrier (CC) within the system that consists of the PCell and one or SCell(s). The SCell CC may (as one possibility) constitute a New Carrier Type (NCT) which is not bound by the conventional requirement to broadcast CRS in each subframe. Thus, as shown schematically in Figure 5(b), such an SCell may broadcast a "reduced" CRS whilst in the "on" mode, for example only once per five subframes instead of every subframe, thereby reducing the overhead and interference caused by CRS.

Depending on the data traffic from and to the UE, in order to reduce base station power consumption and the interference in the air, not all the carriers corresponding to the SCells will be switched on at a given time. When a SCell is switched off, the CC provided by the SCell to provide the additional capacity is not available to a UE in the corresponding coverage area. For LTE, current discussions in 3GPP indicate that the on/off scheme would not be applied for a cell acting as a PCell. Incidentally, as will become clear from the subsequent description, "off" does not necessarily mean completely de-activated. Under current proposals (but not necessarily in the embodiments to be described) a cell may be referred to as "off" whilst still broadcasting limited signals. Such a cell may therefore be regarded as only nominally "off", or as being in a "sleep mode". A cell may be regarded as "on" if it broadcasts all of its normal signals such as PSS/SSS allowing a UE to synchronize to it in the conventional way.

Various on/off schemes for small cells are being considered, including:

### 1) Baseline schemes without any on/off

In these schemes, the small cell is always on.

### 2) Long-term on/off schemes for energy saving

In these schemes, the small cells may be turned on/off in large time scales. Here, "off" means that limited signals such as DRS may continue to be broadcast as already mentioned.

### 3) Semi-static on/off schemes

In these schemes, the small cells may be turned on/off semi-statically. The criteria used for semi-static on/off may be the traffic load increase/decrease, UE arrival/departure (i.e. UE-cell association), and packet call arrival/completion. With legacy procedures, the feasible time scales of semi-static on/off schemes are generally in the order of seconds to hundreds of millisecond (tens of frames) level; and with possible enhancements, the transitions may reduce to tens of milliseconds (a few frames) if all UEs connected to the cell are at least of Rel.12.

### 4) Ideal, dynamic on/off schemes

In these schemes, the small cells may be turned on/off at a millisecond (subframe) level, following criteria such as packet arrival/completion and the need for interference coordination/avoidance in subframe time scales. In other words, at the moment of a packet arrival, the small cell can be turned on immediately and transmit the packet to a UE, and it can be turned off at the moment of the completion of the packet. Likewise the small cell can be turned on/off immediately based on the need for interference coordination/avoidance. These schemes cannot be supported at least according to current standards.

### 5) NCT with NCTCRS (i.e., reduced CRS)

This is the case where the SCell provides a New Carrier Type and the CRS is in a reduced form specified for the NCT, corresponding to Figure 5(b). Incidentally, although Figure 5(b) includes the label "(NCT)" usage of reduced CRS is not necessarily confined to the NCT.

A further proposal, as shown in Figure 5(c), is that an SCell which is switched off does not transmit even the reduced CRS, but instead broadcasts a Discovery Reference Signal (DRS). In order for a cell which is "off" to be detectable it may transmit some Discovery Reference Signals (DRS). In a scheme currently under discussion in 3GPP it is proposed to have periodic transmission of DRS comprising Primary Synchronization Signal (PSS), the Secondary Synchronization Signal (SSS) detection and some (discontinuous) Common Reference Signals (CRS). DRS defined for Release 12 comprises PSS/SSS and CRS with optional CSI-RS. The PSS/SSS and CRS are a subset of the existing (mandatory) signals that would normally be transmitted by a cell. The CSI-RS signals may be configured independently, but are very similar to existing (optional) CSI-RS which may be configured for channel state reporting. Compared with the reduced CRS of Fig. 5(b), the DRS has an even longer periodicity. Typically the DRS period would be 40ms and the DRS would extend over around 5ms (5 subframes). Again, the Scell may provide a NCT but is not necessarily restricted to this type.

If a cell is initially transmitting nothing at all it is not detectable by the UE (at least not by monitoring its radio transmissions). If the cell transmits DRS (in the nominally "off" state) it can be detected by the UE and at least rough downlink timing and frequency synchronisation obtained from the DRS. On the basis of the cell being detected, it can be configured to serve the UE, for example as an SCell. When the cell does get switched on the CRS are present in every subframe and UE can obtain the more precise timing and frequency synchronization needed for data reception. The main benefit of such a scheme is that interference is reduced when the cell is "off" but downlink data can be transmitted when the cell is "on".

Under this assumption, for a SCell, the process of the UE synchronization with the Cell incurs delays of possibly several milliseconds between the when SCell is switched on and to the point when the UE is synchronized and able to use the CC for downlink data reception. This will make the dynamic switch on/off of the SCell less effective due to the delay, and the drawback will be either the SCell is kept "on" longer than it needs to be or the UE will experience a delay before it can use the additional CC.

In addition if the UE will make uplink transmissions to the SCell, it is might be necessary to adjust the uplink timing advance (TA) on the SCell with respect to the UL timing on the PCell.

The invention addresses the following two issues with the scheme outlined above:
- The transmission of DRS (or other identification signal) is essential to allow the cell to be detected. The periodically transmitted DRS signals consume power and generate interference.
- A delay is needed before the radio resources can be utilized, when the off-cell is switched on. This introduces latency and reduces effectiveness of the on/off scheme.

### Summary of the Invention

According to a first aspect of the present invention, there is provided a wireless communication method comprising a terminal obtaining, from signals transmitted from a first cell, synchronization information relating to a second cell, the second cell in physical proximity to the first cell, without the terminal receiving, from the second cell, signals from which synchronization information might be obtained.

Thus, in contrast to the prior art, the terminal does not need to obtain synchronization information directly from the second cell in order to synchronize with the second cell, but can do so via the first cell with which the terminal is already in wireless communication.

Here, "signals from which synchronization information might be obtained" can include any of the kinds of signal conventionally broadcast or transmitted by a cell in order to enable terminals to become synchronized. Examples in LTE would include PSS/SSS, CRS and DRS.

The "synchronization information" includes any or all information needed by the terminal in order to receive transmissions from the second cell, such as timing and/or frequency information of that cell. More particularly, for example, the synchronization information may include a downlink frame timing, a carrier frequency and (if not already known to the terminal) a frequency band available to the second cell. A cell identifier (cell ID) may also be included, allowing the terminal to attribute the information to a specific cell.

"Physical proximity" means that the cells are positioned sufficiently close to one another (including partly or wholly overlapping) that the terminal can either assume the same timing for the first and second cells, or can make a good estimate of the timing difference, as seen by the terminal, of the second cell relative to the first.

The above method is usually applied where the second cell is not transmitting signals for allowing terminals to obtain synchronization information. Indeed the second cell need not be transmitting signals at all, and hence may be completely off (in contrast to the nominal "off" state described in the introduction). In particular, in the context of an LTE wireless communication system there is no need for the second cell to transmit DRS. Such a cell can still be considered to exist if it has operated at some time in the past and/or may be turned on at some future time.

Thus, embodiments of the present invention can be applied to a wireless communication system in which, to reduce power consumption of a base station providing the second cell, and/or to reduce interference caused by the second cell to other cells or terminals, the second cell is deliberately arranged not to broadcast signals from which synchronization information can be obtained such as PSS/SSS, (reduced) CRS or DRS. Instead the necessary synchronization information is provided through signals transmitted via a different cell.

A feature in embodiments is therefore that a first cell provides assistance to a terminal in quickly synchronizing with a second, "off" cell (which may be completely silent and powered-down) once that second cell is turned on. In other words the terminal can obtain synchronization information for the second cell more quickly than by waiting for the second cell to be turned on and then performing the known synchronization process of reading PSS/SSS and so forth.

However, the above method can be applied where the terminal, for whatever reason, is not receiving signals from the second cell from which synchronization information could be obtained, even if the second cell is already on.

The terminal may receive, prior to the above mentioned "obtaining" step, an indication relating to obtaining the synchronization information in the manner defined above, i.e. from transmitted signals of the first cell. This indication may be in the form of an instruction from the network to the terminal prior to making data available to the terminal from the second cell, in which case the indication may form part of a resource allocation message relating to the second cell. Alternatively the indication may be an advisory message for possible future use. The indication may provide the terminal with guidance on how to obtain synchronization information of the second cell, from the signals transmitted from the first cell: for example the indication may specify an offset or multiplication factor to apply to synchronization information of the first cell in order to obtain the synchronization information of the second cell.

In one embodiment, the indication is received from the first cell. In other words the same cell as provides the terminal with the synchronization information is used to inform the terminal that it should obtain that information (and preferably how to do so). In this case, typically but not essentially, the first cell is a primary cell of the terminal and the second cell is a serving cell or a potential serving cell of the terminal.

Alternatively the indication is received from a third cell which is different from either of the first and second cells. In this case the first cell may be a serving cell (e.g. secondary cell) of the terminal, the second cell is a serving cell or a potential serving cell of the terminal, and the third cell is a primary cell of the terminal.

In any case, the indication provided to the terminal (by the first cell or third cell) may be made by at least one of:
RRC signalling;
MAC layer signalling;
inclusion in PDCCH; or
inclusion in a system information block.

In any method as defined above, the terminal may derive the synchronization information relating to the second cell from synchronization information relating to the first cell and contained in/derivable from the transmitted signals from the first cell. In other words the terminal is expected to obtain the synchronization information for the second cell on the basis of the synchronization information of the first cell (which may be the same as that conventionally broadcast by the cell), and there need be no separate synchronization information for the second cell. Examples of conventional signalling in LTE, from which synchronization information might be obtained, include PSS/SSS, CRS and DRS.

Alternatively, however, the first cell includes, in the transmitted signals, synchronization information relating to the second cell in addition to that of the first cell. In this case the first cell transmits, in addition to signals from which its usual synchronization information can be obtained, additional signals indicative of synchronization information relating to the second cell.

In the latter case, the synchronization information relating to the second cell may be included in a system information block broadcast by the first cell.

In any method as defined above, the synchronization information will usually comprise at least one of timing and frequency information of the cell to which it relates. Although both types of information are preferably obtained by the terminal, in some implementations the frequency may be known in advance, or precise timing information may not be obtainable owing to physical separation of the cells.

The synchronization information may apply to a group of cells (in other words there may be more than one "second cell").

More particularly, the synchronization information relating to the second cell may include one of:
an absolute timing and/or frequency to be used in the second cell; and
a relative timing and/or frequency with respect to that of the first cell.

According to a second aspect of the present invention, there is provided a wireless communication system comprising a terminal and at least one base station providing first and second cells, the second cell in physical proximity to the first cell, wherein:
the terminal is arranged to obtain, from signals transmitted from the first cell, synchronization information relating to the second cell, the second cell in physical proximity to the first cell, without the terminal receiving signals, from the second cell, from which synchronization information might be obtained.

The above system may be an LTE-based system.

According to a third aspect of the present invention, there is provided a terminal arranged for wireless communication with a first cell and arranged to obtain, from signals transmitted from the first cell, synchronization information relating to the second cell, the second cell in physical proximity to the first cell, without the terminal receiving signals from the second cell from which synchronization information might be obtained. An adaptation of this terminal (compared with a conventional terminal) may include being configured to recognise, in a broadcast or specific transmission from a first cell, the above mentioned "indication" relating to obtaining synchronization information of the second cell.

According to a fourth aspect of the present invention, there is provided a base station arranged for wireless communication with a terminal via a first cell provided by the base station, the base station arranged to provide, via the first cell, synchronization information relating to a second cell from which second cell the terminal does not receive signals from which synchronization information might be obtained, the second cell in physical proximity to the first cell. Compared with a conventional base station, this base station may be configured to include, in a broadcast or specific transmission via the first cell, the above mentioned "indication" relating to obtaining synchronization information of the second cell

A further aspect relates to software for allowing transceiver equipment equipped with a processor to provide a terminal or a base station as defined above. Such software may be recorded on a computer-readable medium.

Thus, an embodiment of the present invention may provide a mechanism for allowing the information regarding the time/frequency synchronization of a second cell to be transmitted/derived from a first cell.

This accurate time/frequency information sharing is possible when the two cells are located close to each other. One purpose of such synchronization information sharing is that the second cell can switch off its transmission of the normal signals for cell identification (e.g. PSS/SSS/CRS) if active, or discovery reference signal (DRS) when it is in the off mode. Another use of such sharing is when a UE is not receiving from the second cell, signals indicative of synchronization information of the second cell for some reason. In such cases the UE will be able to obtain the synchronization information pertaining to the second cell, from the first cell. Various signalling options are envisaged to inform the UE that it should derive the synchronization from signals transmitted by the first cell, or to allow the first cell to convey directly the synchronization information to the UEs. Embodiments allow UEs to synchronize with cells in off-mode, even when they are not transmitting signals such as the DRS. Under some conditions, the need to transmit or receive identification signals (or the DRS for cells in off mode) is eliminated, thus reducing interference and saving power, while keeping an efficient synchronization process between a UE and a cell, as if the cell's identification signals or DRS were still transmitted.

Embodiments of the invention may provide for sending/receiving downlink or uplink data packets on the secondary cell with timing and/or carrier frequency based on the synchronization information determined according to the invention. Downlink data packets may also contain reference signals intended for the demodulation of the data by the UE, but such reference signals may also be used for further refinement of synchronisation information by the UE (i.e. more precise estimation of timing and/or carrier frequency). Similarly, uplink data packets may contain reference signals for the use of the network.

In general, and unless there is a clear intention to the contrary, features described with respect to one aspect of the invention may be applied equally and in any combination to any other aspect, even if such a combination is not explicitly mentioned or described herein.

The term "cell" used above is to be interpreted broadly, and may include, for example, the communication range of a transmission point or access point. As mentioned earlier, cells are normally provided by base stations. It is envisaged that the base stations will typically take the form proposed for implementation in the 3GPP LTE and 3GPP LTE-A groups of standards, and may therefore be described as an eNB (eNodeB) (which term also embraces Home eNB or HeNB) as appropriate in different situations. However, subject to the functional requirements of the invention, some or all base stations may take any other form suitable for transmitting and receiving signals from other stations.

The "terminal" referred to above may take the form of a user equipment (UE), subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation whatsoever is to be implied from this.

### Brief Description of the Drawings

Reference is made, by way of example only, to the accompanying drawings in which:
Figure 1 illustrates a basic system architecture in LTE;
Figure 2 illustrates a Small Cell Network, SCN;
Figure 3 shows the mapping between logical channels, transport channels and physical channels in LTE;
Figure 4 illustrates a generic frame structure used in LTE;
Figure 5(a) shows a conventional pattern of common reference signals CRS in LTE;
Figure 5(b) shows a reduced CRS pattern proposed for use by active secondary cells in LTE;
Figure 5(c) shows a Discovery reference signal DRS proposed for use by sleep mode secondary cells in LTE;
Figure 6 is a flowchart of steps in a method embodying the present invention;
Figure 7 is a schematic block diagram of a UE to which the present invention may be applied; and
Figure 8 is a schematic block diagram of an eNB to which the present invention may be applied.

### Detailed Description

The system configuration and the scenario of most interest in embodiments of the present invention is similar to that described in the introduction, i.e. in an LTE-based wireless communication system there is a PCell and at least one SCell serving the UE, and the PCell and the SCell(s) will jointly serve the UE by the means of carrier aggregation.

Certain embodiments are based on the principle that synchronization information of one cell can be applied to another cell. In this case, in addition to the scenario settings described above, it is assumed that the PCell and SCell are in the same frequency band and arranged to be synchronized and either co-located or located sufficiently close to each other that the difference in timing of signals arriving at the UE is not significant. For LTE this would be achieved if the time difference is less than the cyclic prefix duration of the downlink OFDM transmission from the relevant cells. Under this condition, it becomes reasonable to assume:
1) The radio propagation delays to/from the UE to the PCell or the SCell are equal.
2) The UE can assume the same frequency synchronization and timing synchronization information for both SCell and PCell. This can include the case where (as is preferable) the respective carrier frequencies of the PCell and SCell are different, the SCell frequency being derived by applying an offset or multiplying factor to the PCell frequency.

Therefore, a UE will able to obtain the time/frequency synchronization information and the uplink timing advance to the SCell, from its connection to the PCell, even if the SCell is in off mode and does not transmit the DRS containing the PSS and SSS. It should be noted that such an SCell may be completely silent, i.e. not transmitting signals of any kind. It may be more correct to refer to such an SCell as a "potential SCell" rather than an actual SCell of the UE, but for convenience it will be simply referred to below as an SCell. It can be assumed that even if a cell is completely off at present, the cell has operated at some time in the past and thus has a cell ID and a record of its existence in a supervising eNB. Thus, it is reasonable to refer to the existence of a cell even if it is presently silent.

Once the SCell is reactivated to the "on" mode, the UE will not have to go through the CRS-based procedure to obtain precise time/frequency synchronization, or the timing advance procedure, before it will be able to receive data originated from the SCell bandwidth. This allows the SCell to operate on the basis of dynamic on and off.

In other embodiments of the present invention, it is assumed that there are at least two co-located SCells in a different frequency band and possibly provided from a different location to the PCell. In this case, the UE cannot necessarily derive time/frequency synchronisation for the SCells from the PCell. However the UE would be able to derive time/frequency synchronisation for a given SCell from one of the other SCells provided that the other SCell transmits DRS (for coarse synch) or is "on" (in other words, transmitting normal signals for synchronization information and reference signals for precise synchronization and data reception).

As explained in the introduction, a terminal conventionally obtains synchronization information of a cell by decoding various signals broadcast by that cell, such as PSS/SSS, CRS and DRS. There is consequently a distinction between the synchronization information itself and the signals used to convey that information to a termninal. For convenience, the following description will refer to broadcasting or transmitting synchronization information as shorthand for broadcasting/transmitting signals from which synchronization information might be obtained.

An outline of steps performed in embodiments is shown in the flowchart of Figure 6. The process starts at step S10. In step S12, a secondary cell (SCell) in the vicinity of a UE, is turned off. This can include that the cell remains off from an earlier time (rather than being switched off now), so long as its presence is known to the UE in some way, for example by signalling from a primary cell eNB. Referring back to Figure 2, such an Scell could be provided by a Femto BS 22, whilst UE 10 is in wireless communication with a PCell provided by Macro BS 20, and another SCell provided by Pico Bs 21. Of course, this is only one example.

As already mentioned, in this context "off" can mean truly "off" in the sense that no signals at all need be transmitted by that cell; at least there is no need for that SCell to broadcast synchronization information. This maximises power saving and minimises the potential for that cell to interfere with transmissions of other cells or UEs.

In step S14, the UE obtains information which can either be used directly as, or provides an indication of, the synchronization information of the "off" cell. In other words the UE obtains from another cell, information regarding the timing and/or frequency (carrier frequency and frequency band)which would be used by the turned-off SCell once it is turned on. As already mentioned this information can be obtained either from the PCell such as the cell of Macro BS 20 in Fig. 2, or from another SCell which is currently on such as the cell of Pico BS 21 in Fig. 2. This allows the UE to know how to synchronize to the cell (e.g. Femto cell 22) once it is turned on.

Obtaining this synchronization information can be initiated in various ways. Typically, the UE will be prompted to do so by the network (e.g. my Macro BS 20), through an indication or explicit instruction supplied to the UE. However, it would also be possible for the UE to decide for itself to obtain the synchronization information, or it may acquire the information naturally through synchronizing to another cell (where the timing/frequency are the same for both cells), without having to take any specific additional action. In the following description, it is assumed that the network initiates the UE obtaining the synchronization information, perhaps after taking a decision to offload part of downlink data for the UE onto the currently-off cell. In any case, the UE reads or derives the synchronization information (performing any necessary calculation such as adding relative values to another cell's synchronization information) stores the results in a memory for future use. Information for multiple cells may be maintained in the memory, and distinguished on the basis of a cell ID.

In S16, the SCell which was off in S12, becomes turned on. It may be assumed that a supervising eNB (such as the Macro BS 20 in Fig. 2), and/or higher level nodes in the system, configure the SCell to transmit downlink data to the UE. The newly-turned on SCell (e.g. Femto cell 22) will normally provide an additional carrier for the UE, or alternatively it might be turned on to replace another SCell (e.g. Pico cell 21) with which the UE was previously in communication.

In S18, the UE 10, referring to the stored synchronization information for the turned-on cell, synchronizes to the cell and begins directly to receive downlink data packets from (and/or transmit uplink data packets to) the newly turned-on SCell, without having to conduct the normal synchronization procedure with the SCell, and the process ends at S20. This reduces the delay before the UE can utilize the radio resources of the second cell, compared with waiting for the SCell to be turned on and then performing the conventional synchronization process.

Some more particular embodiments will now be described. In general, unless otherwise indicated, the embodiments described below are based on LTE, where the network comprises multiple eNodeBs, each controlling one or more downlink cells, and at least some of the downlink cells having a corresponding uplink cell. Each DL cell may serve one or more terminals (UEs) which may receive and decode signals transmitted in that serving cell. In a mode called the carrier aggregation, a plural number of cells operating on different frequency band may transmit signals simultaneously to a UE, the UE will be able to decode the data transmitted from the different bands (cells) at the same time.

As indicated earlier, one scenario where the proposed solution in particular applies to is the LTE carrier aggregation mode. A UE in carrier aggregation mode is simultaneously connected to cells operating in different frequency band, which typically include PCell and a (number of) SCell(s).

There are different possible mechanisms for the UE to obtain the timing of a second cell (e.g. SCell) from a first cell (e.g. PCell)

In a first embodiment, the network will inform the UE via its RRC connection with the PCell to expect to use the timing/frequency synchronization signals (such as PSS/SSS/CRS or DRS) from the first cell to derive the timing of the second cell. Such an indication from the network might imply that the second cell is about to be turned on, and might also imply a request for the UE to communicate using the second cell, but need not necessarily imply either of these things.

As an alternative option, the relative or absolute timing/ frequency of the second cell can be sent. Informing the UE of relative amounts (offsets) in time and/or frequency allows the UE to derive the synchronization information for the second cell by calculation from the timing/frequency synchronization signals of the first cell.

Similarly, the messages described above could be sent via the MAC layer.

As variation, the signalled information could indicate a group of cells with the same (or related) timing. Then if the timing of one member of the group is obtained, the timing of the other members can be derived. The indication would specify cell IDs of the cells in the group, allowing the UE to recognise the cells once switched on. Although the UE may be aware of the cells at a given location, this is not essential and the UE may receive a configuration message to use another cell without having prior knowledge of that cell.

As a further alternative or addition to the above, the UE may be configured with a default method to compute the frequency of the second cell from other information, such as using the Pcell frequency and the ratio of the carrier frequencies of the two cells (which are likely to be known to the UE or signalled explicitly). In this case the Pcell frequency would be the reference "clock" for the UE to derive the frequency of the Scell.

In a second embodiment, the control signalling (e.g. PDCCH) via the PCell will inform the UE that it will derive the timing/synchronization information regarding the SCell from signals transmitted by the PCell (e.g. from the PCell PSS/SSS or from the PDCCH itself). Depending on the relationship between the cells, the PCell synchronization information can be used directly or modified via offsets (relative amounts) to arrive at the SCell synchronization information.

As an alternative, the actual timing/frequency synchronization information for the SCell is sent via the PDCCH. in other words the synchronization information for the turned-off cell is specified explicitly rather than having to be derived from other information. The above signals could be part of a message allocating resources or scheduling a transmission on the second cell.

In a third embodiment, a brief message contained in a System Information Block (SIB), indicates to all UEs within range to derive the timing/synchronization information regarding another Cell, from one or more signals in the cell carrying the SIB. Typically this would be the SIB broadcast by the PCell. Alternatively, the SIB of the PCell is extended to contain the actual timing/frequency information of the other cell (not an indication).

In the first to third embodiments above, it was assumed that an SCell was not transmitting timing/frequency synchronization information and that therefore a UE obtains assistance from another cell in order to obtain this information.

In a fourth embodiment, the SCell of interest may be transmitting synchronization information (at least in a reduced form such as DRS) but the UE may not receive the transmission of the SCell for some reason. The principle of the invention may also be applied in such a case: the UE obtains an indication from another cell informing the UE, or enabling the UE to derive, the synchronization information of an SCell from information transmitted by that other cell. This may enable the UE to synchronize more quickly to an SCell which transmits synchronization information only infrequently.

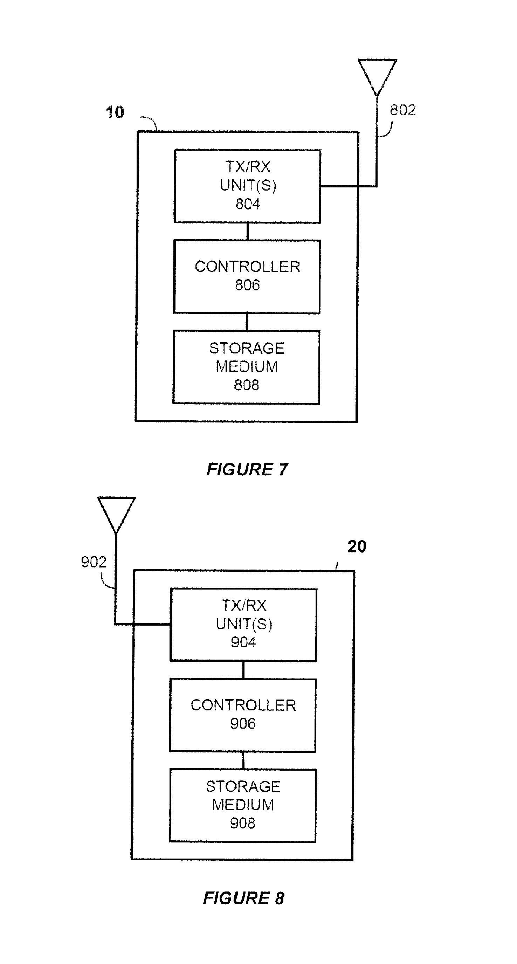

Figure 7 is a block diagram illustrating an example of a UE 10 to which the present invention may be applied. The UE 10 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The UE 10 includes transmitter/receiver unit(s) 804 connected to at least one antenna 802 (together defining a communication unit) and a controller 806 having access to memory in the form of a storage medium 808. The controller 806 may be, for example, a microprocessor, digital signal processor (DSP), application-specific integrated circuit (ASIC), field-programmable gate array (FPGA), or other logic circuitry programmed or otherwise configured to perform the various functions described above, including deriving the time/frequency information of the turned-off SCell from information obtained from another cell. For example, the various functions described above may be embodied in the form of a computer program stored in the storage medium 808 and executed by the controller 806. The transmission/reception unit 804 is arranged, under control of the controller 806, to receive the transmission from the PCell/other SCell, and subsequently to receive downlink data from the newly turned-on SCell as discussed previously. The storage medium 808 stores the synchronization information for the turned-off cell(s), for future use.

Figure 8 is a block diagram illustrating an example of an eNB 20 responsible for either the PCell or an SCell (or possibly both). The base station includes transmitter/receiver unit(s) 904 connected to at least one antenna 902 (together defining a communication unit) and a controller 906. The controller may be, for example, a microprocessor, DSP, ASIC, FPGA, or other logic circuitry programmed or otherwise configured to perform the various functions described above, including (where the eNB provides the PCell) coordinating operations of the SCells in view of the UE. For example, the various functions described above may be embodied in the form of a computer program stored in the storage medium 908 and executed by the controller 906. The transmission/reception unit 904 is responsible for transmission of frequency/timing information of its own cell as well as (in embodiments) transmission of an indication of how to derive the timing/frequency of the off SCell, under control of the controller 906.

Thus, to summarise, embodiments of the present invention allow the information regarding the time/frequency synchronization of a second cell to be transmitted derived from a first cell. This accurate time/frequency information sharing in this way is possible when the two cells are located close to each other. The purpose of such synchronization information sharing is that the second cell can switch off its transmission of the normal signals for cell identification (e.g. PSS/SSS/CRS) if active, or discovery reference signal DRS) when it is in the off mode. The UE will be able to obtain the synchronization information from the first cell. Various signalling options are envisaged to inform the UE that it should derive the synchronization from the first cell, or to allow the first cell to convey directly the synchronization information to the UEs.

Various modifications are possible within the scope of the present invention.

As already mentioned, the term "cells" in the above description is to be interpreted broadly. Cells need not each have a different geographical area, or a different base station. In general, cells can be defined on a downlink, uplink, or on both. The term "cell" embraces "transmission points" and "access points".

For the purposes of explanation, it was assumed above that a UE is in communication with a PCell and needs to obtain synchronization information for an SCell. However, the processes described above are not limited to the case of PCell and Scell, but could be applied to any kind of serving cell of a UE.

For convenience, the invention has been described with respect to specific cells. However, the invention can be applied without the necessity for cells, and may be described in terms of the communications between different stations (including base stations supporting cells, mobile stations (e.g. D2D), and other types of station such as relays, and to communication via Remote Radio Heads of base stations).
The invention is not limited to carrier aggregation, and could be applied for example to so-called "dual connectivity", where the cells are controlled by different eNodeBs.

The invention is not limited to cell "on/off" or discovery via DRS, and could be applied where the second cell transmits no signals except those directly associated with data transmission (e.g. downlink data packets, or acknowledgements of uplink data packets). In other words, the SCell may be configured such that it does not transmit synchronization information, this being obtained/derived by the UE in the manner outlined above, yet the SCell may be engaged in data transmissions with other UEs.

The "synchronization information" referred to above will normally include both frequency and timing information of the cell of interest. However, it is not essential for a UE to obtain both frequency and timing information by the method of the invention. Frequency information may be useful by itself even if precise timing information may not be derivable (for example owing to unknown differences in propagation delays among the cells).

The invention is equally applicable to LTE FDD and TDD, and to mixed TDD/FDD implementations (i.e. not restricted to cells of the same FDD/TDD type). The principle can be applied to other communications systems such as UMTS. Accordingly, references in the claims to a "terminal" are intended to cover any kind of user device, subscriber station, mobile terminal and the like and are not restricted to the UE of LTE.

Typically, the Pcell and SCells will have different respective base stations, but this is not essential. For example, the Pcell and a first secondary cell may be provided by the same base station, with a further secondary cell provided by a second base station. Alternatively, two or more Scells may share the same base station. Any combination is possible, as will be apparent to those skilled in the art.

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be clearly understood that various changes and/or modifications may be made to the particular embodiment just described without departing from the scope of the claims.

### Industrial Applicability

The proposed invention allows UEs to synchronize with cells in off-mode, even when they are not transmitting signals such as the DRS. The invention, under some conditions, eliminates the need to transmit identification signals (or the DRS for cells in off mode), thus reducing interference and saving power, while keeping an efficient synchronization process between a UE and a cell, as if the cell's identification signals or DRS were still transmitted. The present invention thus contributes to power saving and interference mitigation in a wireless communication system.

## Claims

1. A wireless communication method comprising a terminal obtaining, from signals transmitted from a first cell, synchronization information relating to a second cell, the second cell in physical proximity to the first cell, without the terminal receiving signals from the second cell from which synchronization information might be obtained.

2. The method according to claim 1 wherein the second cell does not transmit signals from which synchronization information might be obtained.

3. The method according to claim 1 or 2 further comprising the terminal receiving, prior to said obtaining, an indication relating to obtaining the synchronization information.

4. The method according to claim 3 wherein the indication is received from the first cell.

5. The method according to claim 4 wherein the first cell is a primary cell of the terminal and the second cell is a serving cell or a potential serving cell of the terminal.

6. The method according to claim 3 wherein the indication is received from a third cell.

7. The method according to claim 6 wherein the first cell is a secondary cell of the terminal, the second cell is a serving cell or a potential serving cell of the terminal, and the third cell is a primary cell of the terminal.

8. The method according to any of claims 3 to 7 wherein the indication to the terminal is made by at least one of:
RRC signalling;
MAC layer signalling;
inclusion in PDCCH; or
inclusion in a system information block.

9. The method according to any preceding claim further comprising the terminal deriving the synchronization information relating to the second cell from synchronization information relating to the first cell and contained in the transmitted signals from the first cell.

10. The method according to any of claims 1 to 8 further comprising the first cell including, in the transmitted signals, synchronization information relating to the second cell in addition to synchronization information of the first cell.

11. The method according to claim 10 wherein the synchronization information relating to the second cell is included in a system information block broadcast by the first cell.

12. The method according to any preceding claim wherein the synchronization information comprises at least one of timing and frequency information of the cell to which it relates.

13. The method according to claim 12 when dependent on claim 10 or 11, wherein the synchronization information relating to the second cell includes one of:
an absolute timing and/or frequency to be used in the second cell; and
a relative timing and/or frequency with respect to that of the first cell.

14. A wireless communication system comprising a terminal and at least one base station providing first and second cells, the second cell in physical proximity to the first cell, wherein:
the terminal is arranged to obtain, from signals transmitted from the first cell, synchronization information relating to the second cell, the second cell in physical proximity to the first cell, without the terminal receiving signals from the second cell from which synchronization information might be obtained.

15. A terminal arranged for wireless communication with a first cell and arranged to obtain, from signals transmitted from the first cell, synchronization information relating to the second cell, the second cell in physical proximity to the first cell, without the terminal receiving signals from the second cell from which synchronization information might be obtained.

16. A base station arranged for wireless communication with a terminal via a first cell provided by the base station,
the base station arranged to provide, via the first cell, synchronization information relating to a second cell from which second cell the terminal does not receive signals from which synchronization information might be obtained, the second cell in physical proximity to the first cell.

## Amended claims

### Amended claims in accordance with Rule 137(2) EPC.

1. A wireless communication method comprising a terminal (10) obtaining, from signals transmitted from a first cell (20 or 21), synchronization information relating to a second cell (22), the second cell in physical proximity to the first cell, without the terminal receiving signals from the second cell from which synchronization information might be obtained; **characterised in that**:
the second cell (22) is in a turned off state when the terminal (10) obtains the synchronization information.

2. The method according to claim 1 further comprising the terminal (10) receiving, prior to said obtaining, an indication relating to obtaining the synchronization information.

3. The method according to claim 2 wherein the indication is received from the first cell (20 or 21).

4. The method according to claim 3 wherein the first cell (20) is a primary cell of the terminal (10) and the second cell (22) is a serving cell or a potential serving cell of the terminal.

5. The method according to claim 2 wherein the indication is received from a third cell.

6. The method according to claim 5 wherein the first cell (21) is a secondary cell of the terminal (10), the second cell (22) is a serving cell or a potential serving cell of the terminal, and the third cell is a primary cell (20) of the terminal.

7. The method according to any of claims 2 to 6 wherein the indication to the terminal (10) is made by at least one of:
RRC signalling;
MAC layer signalling;
inclusion in PDCCH; or
inclusion in a system information block.

8. The method according to any preceding claim further comprising the terminal (10) deriving the synchronization information relating to the second cell (22) from synchronization information relating to the first cell (20 or 21) and contained in the transmitted signals from the first cell.

9. The method according to any of claims 1 to 7 further comprising the first cell (20 or 21) including, in the transmitted signals, synchronization information relating to the second cell (22) in addition to synchronization information of the first cell.

10. The method according to claim 9 wherein the synchronization information relating to the second cell (22) is included in a system information block broadcast by the first cell (20 or 21).

11. The method according to any preceding claim wherein the synchronization information comprises at least one of timing and frequency information of the cell to which it relates.

12. The method according to claim 11 when dependent on claim 9 or 10, wherein the synchronization information relating to the second cell (22) includes one of:
an absolute timing and/or frequency to be used in the second cell (22); and
a relative timing and/or frequency with respect to that of the first cell (20 or 21).

13. A wireless communication system comprising a terminal (10) and at least one base station for providing first and second cells (20 or 21, 22), the second cell (22) in physical proximity to the first cell (20 or 21), wherein:
the terminal (10) is arranged to obtain, from signals transmitted from the first cell (20 or 21 ), synchronization information relating to the second cell (22), without the terminal receiving signals from the second cell from which synchronization information might be obtained; **characterised in that**:
the system is so arranged that the second cell (22) is in a turned off state when the terminal (10) obtains the synchronization information.

14. A terminal (10) arranged for wireless communication with a first cell (20 or 21) and arranged to obtain, from signals transmitted from the first cell, synchronization information relating to a second cell (22), the second cell in physical proximity to the first cell, without the terminal receiving signals from the second cell from which synchronization information might be obtained; **characterised in that**:
the terminal (10) is arranged to obtain the synchronization information at a time when the second cell (22) is in a turned off state.

15. A base station arranged for wireless communication with a terminal (10) via a first cell (20 or 21) provided by the base station,
the base station arranged to provide, via the first cell (20 or 21), synchronization information relating to a second cell (22) from which second cell the terminal does not receive signals from which synchronization information might be obtained, the second cell in physical proximity to the first cell; **characterised in that**:
the base station is arranged to provide the synchronization information at a time when the second cell (22) is in a turned off state.
